# EUROPEAN PATENT APPLICATION

(11) **EP 4 740 730 A1**
(43) Date of publication of application: **13.05.2026**
(21) Application number: 25214804.4
(22) Date of filing: 11.11.2025
(51) Int. Cl.: A01K 29/00

(54) **ANIMAL HUSBNDRY METHOD AND SYSTEM**

(30) Priority: 12.11.2024 NL 2039056
(71) Applicant: Lely Patent N.V., 3147 PB Maassluis (NL)
(72) Inventor: Van der Sluis, Joram Robin, 3147 PB Maassluis (NL); Pena Trapero, Juan Manuel, 3147 PB Maassluis (NL); Van Adrichem, Paulus Jacobus Maria, 3147 PB Maassluis (NL)
(74) Representative: Octrooibureau Van der Lely N.V.

(57) **Abstract**

Animal husbandry method and system, the method comprising the following steps:
- keeping a group of animals roaming about freely in an enclosed roaming area;
- automatically monitoring at least one animal;
- repeatedly detecting a number of reference points of said animal;
- analysing the relative positions of the detected reference points;
- determining the pose of the animal from the analysed relative positions of the detected reference points;
- determining from said pose the position of the animal's head relative to its body;
- establishing a most likely animal behaviour or condition associated with said pose and head position.

The method further develops and improves the monitoring of the animals. The determined animal pose is used for animal behaviour and/or condition analysis, allowing for specific, relevant follow-up actions, thus enabling improved animal welfare.

## Description

The present invention relates to an animal husbandry method and system, the method comprising the following steps:
- keeping a group of animals roaming about freely in an enclosed roaming area;
- automatically monitoring at least one animal;
- repeatedly detecting a number of reference points of said animal;
- analysing the relative positions of the detected reference points;
- determining the pose of the animal from the analysed relative positions of the detected reference points.

Such methods are known in the art. Monitoring animals, such as cows in a stable, plays an important role in modern animal husbandry systems. Gathering reliable animal data within a group or herd is of increasing importance.

EP3933766 deals with a system and method for monitoring livestock using a camera arranged above the livestock for gathering data relating to a motion of a tracked individual animal, using a set of identified reference points, each associated with a body part location. The motion data thus obtained are used to establish a mobility level and a mobility score for the animal. The mobility score can be used to detect mobility issues such as lameness.

WO2022/077113 shows an animal management system with a number of imaging devices in which images are processed using artificial intelligence for detecting and locating animals. An identification or classification of the detected animal is generated with a confidence score.

US2022/0398861 relates to an image-based animal object detection apparatus using bounding boxes and key points. With the aid of a neural network animal detection information is being extracted, such as information about the class and a pose of the animal object detected. The pose information of the animal object may distinguish various poses such as sitting, standing, mounting behaviour, rollover and dog sitting.

There is a need for an improved, economical and animal friendly animal husbandry method and system.

It is an object of the present invention to provide such an improved method and system.

The invention achieves the object at least in part by means of a method according to claim 1, in particular an animal husbandry method comprising the following steps:
- keeping a group of animals roaming about freely in an enclosed roaming area;
- automatically monitoring at least one animal;
- repeatedly detecting a number of reference points of said animal;
- analysing the relative positions of the detected reference points;
- determining the pose of the animal from the analysed relative positions of the detected reference points;
- determining from said pose the position of the animal's head relative to its body;
- establishing a most likely animal behaviour or condition associated with said pose and head position.

In this way, the method is versatile and further develops and improves the monitoring of the animals. A user-friendly and cheap method enabling improved animal welfare is thus realized.

The invention is based on the insight that a determined animal pose in combination with a determined head position can be highly advantageously used for accurate animal behaviour and/or condition analysis, allowing for specific, relevant follow-up actions. This results in a secure method.

The invention further achieves the object at least in part by means of a system according to claim 20, in particular an animal husbandry system comprising a group of animals roaming about freely in an enclosed roaming area, monitoring means and at least one processor with image analysis means, said processor being configured to perform the method of any one of claims 1 - 19.

Suitable and advantageous embodiments are described in the dependent claims, as well as in the description below.

According to a first embodiment of the invention, the determining of the pose of the animal is performed using a neural network. Such a neural network is highly suitable for such a task because of its learning capacity.

In a further embodiment, the reference points are situated substantially on the spine of the animal. Such reference points are very suitable to determine the pose of an animal. Preferably, the number of reference points used is four or more. In practice, this has proven to give good results.

Advantageously, the step of automatically monitoring at least one animal includes tracking the location of said animal. Knowing the location of an animal in the course of time is very important.

According to a further embodiment, in the determining and establishing steps, the location and/or the surroundings of the animal are taken into account. In this way, these steps are more accurate.

In accordance with yet another embodiment, one of the known animal behaviours is drinking, wherein said behaviour is selected in case the determined pose and relative head position of the animal indicates that its head is down in the vicinity of a drinking place. Thus, a reliable detection of the animal drinking is realised.

In yet a further embodiment, one of the known animal behaviours is eating, wherein said behaviour is selected in case the determined pose and head position of the animal indicates that its head is down in the vicinity of a feeding place. In this way, eating can reliably be detected.

In accordance with a highly advantageous embodiment, one of the known animal behaviours is offspring drinking, wherein said behaviour is selected in case the determined pose and relative head position of the animal indicates that its head is in the vicinity of the back side of a further, larger animal. The reliable detection of a young animal drinking milk from its mother is very important.

In yet another embodiment, the duration of the offspring drinking is determined. This information is useful for animal management purposes.

According to a further embodiment, the determined duration of the offspring drinking is used to estimate the amount drunk. In this way, the expected total amount of milk can be corrected.

In another embodiment, it is registered which mother animal and/or which teats of said mother animal are involved in said offspring drinking. This information is also useful for animal management purposes.

According to a further embodiment, one of the known animal behaviours is rolling over, wherein said behaviour is selected in case the determined pose of the animal indicates that the pose has been alternating between two positions. This is a reliable way of detecting rolling over behaviour.

According to yet another embodiment, wherein one of the known animal conditions is mastitis, said condition is selected in case the alternating frequency lies within a first interval. For cows, mastitis is a major threat, so that early detection is of high importance. From literature it is known that for a cow a certain rolling over frequency indicates mastitis.

According to an alternative embodiment, wherein one of the known animal conditions is birthing, said condition is selected in case the alternating frequency lies within a second interval. From literature it is known that for some animals a certain rolling over frequency indicates that birthing is imminent.

In accordance with a highly advantageous embodiment, an alarm is generated in case a minimum duration of offspring drinking has not been achieved within a set time interval after the birthing. For example, a newborn calf should be drinking beestings (colostrum) from its mother within a couple of hours after its birth, so that detection thereof is of paramount importance.

In accordance with a further embodiment, wherein one of the known animal behaviours is heat, said behaviour is selected in case the determined pose and head position of the animal indicates that its head is near or on top of another animal. This has proven to be a reliable way of detecting heat (oestrous).

In yet another embodiment, wherein one of the known animal behaviours is heat, said behaviour is selected in case the determined pose of the animal indicates that the animal is restless. This, also, is a good indication of heat (oestrous).

Advantageously, the method further comprises the steps of:
- determining whether the selected animal behaviour or condition necessitates a specific action associated with said behaviour;
- executing said specific action in case of necessity.

In this way, animal welfare is efficiently realised.

According to a further embodiment, the method further comprises the steps of:
- automatically monitoring also at least one person and/or machine in said enclosed roaming area;
- repeatedly detecting a number of reference points of said person and/or machine;
- analysing the relative positions of the detected reference points;
- determining the pose of the person and/or machine from the analysed relative positions of the detected reference points;
- registering the determined pose.

Thus, it is also possible to recognise the pose of a human being and/or a machine, such as e.g. a cleaning robot moving in the enclosed roaming area, making the method even more versatile.

An animal husbandry system in accordance with the invention is characterized in that it comprises a group of animals roaming about freely in an enclosed roaming area, monitoring means and at least one processor with image analysis means, said processor being configured to perform the method according to the invention. A highly useful and safe system is thus realised.

The invention will now be further explained with reference to the following Figures, which schematically illustrate the system according to the invention.
Figure 1 shows a schematic top view of a cow with a number of reference points for use in a method and system according to the invention;
Figure 2 shows a schematic top view of number of cows in a barn for elucidating the method and system according to the invention.

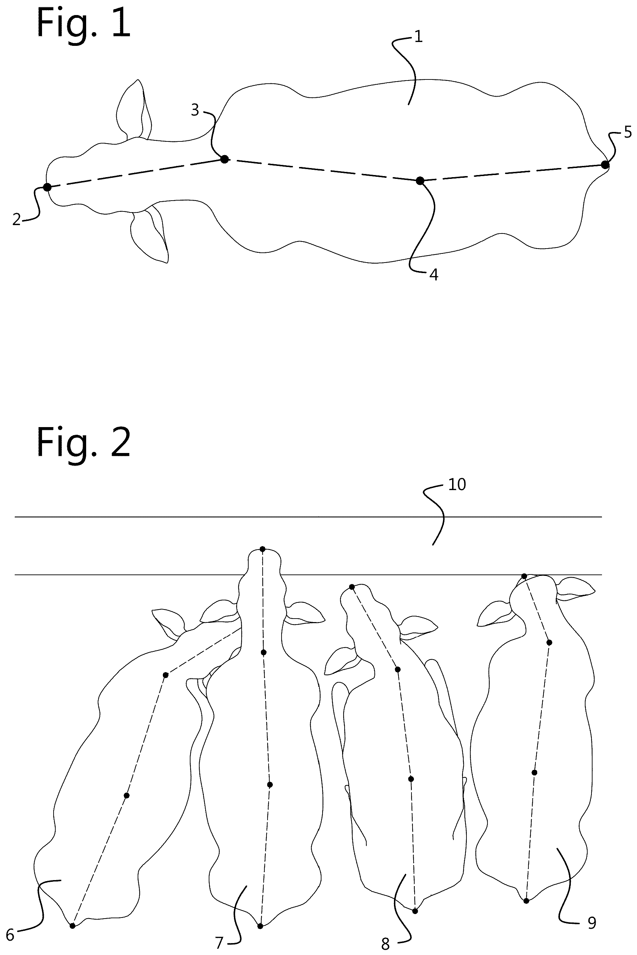

In Figure 1 a top view of a cow with a number of reference points for use in a method and system according to the invention is schematically depicted.

Monitoring animals in a husbandry system, such as cows held in a stable, plays an ever increasing role in modern animal husbandry. Gathering reliable animal data within a group or herd is of great importance.

The invention relates to an animal husbandry method in which a group of animals is kept roaming about freely in an enclosed roaming area. In the example shown, the animals are cows, but the invention can also be applied to an animal husbandry method and system involving other animals, such as goats, pigs, horses, or even chickens, turkeys, etcetera. The enclosed roaming area can be a barn or stable, or a pasture. It can also be a structure with, for example, a partly open roof. The method and system according to the invention can be applied in a free stall barn or in an open area like a pasture with cattle fences. It can also be applied in a combination of a stall and a pasture.

At least one animal, in Figure 1 cow 1, is automatically monitored. Monitoring means, such as at least one optical sensor, e.g. a camera, known as such, are used for this. In case there is a group of animals in the roaming area, preferably a number of cameras is used, covering substantially the whole roaming area, so that the animals can be monitored permanently.

A number of reference points 2 - 5 of said animal 1 are repeatedly detected. These are chosen at the nose 2, neck base 3, middle back 4 and tail base 5, substantially on the spine of the animal 1. Then, the relative positions of the detected reference points 2 - 5 are analysed each time and the pose of the animal 1 is determined from the analysed relative positions of the detected reference points 2 - 5. This is done with the use of a neural network, which outputs a pose and a bounding box for each animal 1. Such a neural network is highly suitable for such a task because of its learning capacity.

A mere bounding box surrounding an animal does not give information about the head of the animal, but in accordance with the invention both the pose and the **relative** head position are being determined.

The animal husbandry system in accordance with the invention uses at least one processor with image analysis means, known as such, said processor being configured to perform the described method steps.

For this purpose, the processor can use, for example, a known (open source) network, like e.g. MoveNet, BlazePose, or YOLO-Pose. See e.g. https://docs.ultralytics.com. YOLO-Pose ^{®} is an already existing network which is used to determine the pose for people and is readily adaptable to use a different number of reference points (in this case four) and different data fed to the network for use with cows or other animals. Training such a model in a manner known per se can be done using e.g. Python or CLI.

The determined pose of the animal 1 is then used to determine also the position of the animal's head relative to its body, and establishing a most likely animal behaviour or condition associated with said pose and head position. This established animal behaviour or condition is then registered.

This method is versatile and further develops and improves the monitoring of the animals. A user-friendly and cheap method enabling improved animal welfare is thus realized. A determined animal pose combined with its relative head position can be advantageously used for a very accurate animal behaviour and/or condition analysis, allowing for specific, relevant follow-up actions. This results in an improved, secure method.

Advantageously, the automatic monitoring of at least one animal 1 includes tracking the location of said animal 1. Knowing the location of an animal in the course of time is very important. To that end, tracking means (known as such) in the form of monitoring and analyzing means configured for determining and tracking the identity and the position of each individual animal are provided, for example in the form of one or more cameras and a processor with appropriate software. The camera(s) can be arranged for monitoring a region or a subarea or a number of subareas of the roaming area. Of course, other (optical) sensors can in principle be used instead, or additionally. The camera(s) can be provided in the area above the animal(s), e.g. on walls or fences (not shown) of the area. Suitable illumination means (not shown) for the area are also provided.

In the determining and establishing steps, the location and/or the surroundings (monitored with the aid of the camera(s)) of the animal 1 are taken into account in the processor's calculations. In this way, these steps are more accurate.

In Figure 2 a schematic top view of number of cows in a barn is shown for elucidating the method and system according to the invention. Cows 6 and 7 are standing and cows 8 and 9 are lying down in the roaming area. Cow 6 is sniffing at cow 7, which is eating at a feeding place 10. Cow 8 is resting, while cow 9 is also eating. Their poses are being detected in accordance with the invention.

Now, the detected poses are matched to a number of known, preferably stored animal behaviours or conditions. A highly reliable detection of such a behaviour or condition is realised by means of the pose detection.

One of the known animal behaviours is drinking, which behaviour is selected in case the determined pose and head position of the animal indicates that its head is down in the vicinity of a drinking place.

A further known animal behaviour is eating, which behaviour is selected in case the determined pose and head position of the animal indicates that its head is down in the vicinity of a feeding place. In Figure 2, this applies to cows 7 and 9. In this way, eating is reliably detected.

A particularly advantageous embodiment involves the detection of a young animal drinking milk from its mother. Offspring drinking is a selected behaviour in case the determined pose and head position of the animal indicates that its head is (possibly raised) in the vicinity of the back side of a further, larger animal. A newborn calf should be drinking beestings (colostrum) from its mother cow within a couple of hours after its birth, so that detection thereof is of paramount importance. In case the calf did not drink timely, the farmer has to take action and manually feed the young animal with suitable milk.

The duration of the offspring drinking can be determined for animal management purposes, as will be explained further below.

Also, the determined duration of the offspring drinking can be used to estimate the amount drunk. In this way, the expected total amount of milk can be corrected.

Advantageously, it is registered which mother animal and/or which teats of said mother animal are involved in said offspring drinking. This information can be used for animal management purposes.

A further known animal behaviours is rolling over, which behaviour is selected in case the determined pose of the animal indicates that the pose has been alternating between two positions. This is a reliable way of detecting rolling over behaviour, which can be associated with either mastitis or forthcoming birthing, depending on the frequency, as is known from literature.

Therefore, the known animal condition mastitis is selected in case the alternating frequency lies within a first interval. For cows, mastitis is a major threat, so that early detection is of high importance. From literature it is known that for a cow a certain rolling over frequency indicates mastitis.

Alternatively, the known animal condition birthing is selected in case the alternating frequency lies within a second interval. Again, from literature it is known that for some animals a certain rolling over frequency indicates that birthing is imminent.

In accordance with a highly advantageous embodiment, an alarm is generated in case a minimum duration of offspring drinking has not been achieved within a set time interval after the birthing. For example, a newborn calf should be drinking beestings (colostrum) from its mother within a couple of hours after its birth, so that detection thereof is of paramount importance. The minimum duration is known from literature. The set time interval can be 2 hours, for example. If the calf has drunk enough within the set time limit, the farmer does not have to take further immediate action.

In accordance with a further embodiment of the invention, one of the known animal behaviours is heat, which behaviour is selected in case the determined pose and head position of the animal indicates that its head is near or on top of another animal. In Figure 2 cow 6, in heat, is sniffing at cow 7. The known animal behaviours heat (oestrous) is also selected in case the determined pose of the animal indicates that the animal is restless. This, also, is a good indication of heat (oestrous).

In a further development of the invention, the method further comprises the steps of:
- determining whether the selected animal behaviour or condition necessitates a specific action associated with said behaviour;
- executing said specific action in case of necessity.

In this way, animal welfare is efficiently realised. For example, in case it is detected that a newborn calf has not yet drunk colostrum, the farmer is alerted to take appropriate action (manual administration of milk). Or, in case mastitis is detected, an alert for a specific medical action is given.

According to yet a further embodiment of the invention, the method further comprises the steps of:
- automatically monitoring also at least one person and/or machine in said enclosed roaming area;
- repeatedly detecting a number of reference points of said person and/or machine;
- analysing the relative positions of the detected reference points;
- determining the pose of the person and/or machine from the analysed relative positions of the detected reference points;
- registering the determined pose.

In this way, it is also possible to recognise the pose of a human being (e.g. a farmer) or a machine, such as a (cleaning) robot moving in the enclosed roaming area, making the method even more versatile.

An animal husbandry system in accordance with the invention is a highly useful, versatile and and safe system.

## Claims

1. Animal husbandry method comprising the following steps:
- keeping a group of animals (1, 6, 7, 8, 9) roaming about freely in an enclosed roaming area;
- automatically monitoring at least one animal (1, 6, 7, 8, 9);
- repeatedly detecting a number of reference points (2, 3, 4, 5) of said animal (1, 6, 7, 8, 9);
- analysing the relative positions of the detected reference points (2, 3, 4, 5);
- determining the pose of the animal (1, 6, 7, 8, 9) from the analysed relative positions of the detected reference points (2, 3, 4, 5);
- determining from said pose the position of the animal's head relative to its body;
- establishing a most likely animal behaviour or condition associated with said pose and head position.

2. Method according to claim 1, wherein the determining of the pose of the animal (1, 6, 7, 8, 9) is performed using a neural network.

3. Method according to any one of claims 1 - 2, wherein the reference points (2, 3, 4, 5) are situated substantially on the spine of the animal (1, 6, 7, 8, 9).

4. Method according to any one of claims 1 - 3, wherein the step of automatically monitoring at least one animal (1, 6, 7, 8, 9) includes tracking the location of said animal (1, 6, 7, 8, 9).

5. Method according to claim 4, wherein, in the determining and establishing steps, the location and/or the surroundings of the animal (1, 6, 7, 8, 9) are taken into account.

6. Method according to claim 5, wherein one of the known animal behaviours is drinking, wherein said behaviour is selected in case the determined pose and head position of the animal (1, 6, 7, 8, 9) indicates that its head is down in the vicinity of a drinking place.

7. Method according to any one of claims 5 - 6, wherein one of the known animal behaviours is eating, wherein said behaviour is selected in case the determined pose and head position of the animal (1, 6, 7, 8, 9) indicates that its head is down in the vicinity of a feeding place (10).

8. Method according to any one of claims 5 - 7, wherein one of the known animal behaviours is offspring drinking, wherein said behaviour is selected in case the determined pose and head position of the animal (1, 6, 7, 8, 9) indicates that its head is in the vicinity of the back side of a further, larger animal (1, 6, 7, 8, 9).

9. Method according to claim 8, wherein the duration of the offspring drinking is determined.

10. Method according to claim 9, wherein the determined duration of the offspring drinking is used to estimate the amount drunk.

11. Method according to any one of claims 8 - 10, wherein it is registered which mother animal and/or which teats of said mother animal are involved in said offspring drinking.

12. Method according to any one of claims 1 - 11, wherein one of the known animal behaviours is rolling over, wherein said behaviour is selected in case the determined pose of the animal (1, 6, 7, 8, 9) indicates that the pose has been alternating between two positions.

13. Method according to claim 12, wherein one of the known animal conditions is mastitis, wherein said condition is selected in case the alternating frequency lies within a first interval.

14. Method according to claim 12, wherein one of the known animal conditions is birthing, wherein said condition is selected in case the alternating frequency lies within a second interval.

15. Method according to claim 14 when dependent on any one of claims 9 - 11, wherein an alarm is generated in case a minimum duration of offspring drinking has not been achieved within a set time interval after the birthing.

16. Method according to any one of claims 5 - 15, wherein one of the known animal behaviours is heat, wherein said behaviour is selected in case the determined pose and head position of the animal (1, 6, 7, 8, 9) indicates that its head is near or on top of another animal (1, 6, 7, 8, 9).

17. Method according to any one of claims 1 - 16, wherein one of the known animal behaviours is heat, wherein said behaviour is selected in case the determined pose of the animal (1, 6, 7, 8, 9) indicates that the animal (1, 6, 7, 8, 9) is restless.

18. Method according to any one of claims 1 - 17, wherein the method further comprises the steps of:
- determining whether the selected animal behaviour or condition necessitates a specific action associated with said behaviour;
- executing said specific action in case of necessity.

19. Method according to any one of claims 1 - 18, wherein the method further comprises the steps of:
- automatically monitoring also at least one person and/or machine in said enclosed roaming area;
- repeatedly detecting a number of reference points of said person and/or machine;
- analysing the relative positions of the detected reference points;
- determining the pose of the person and/or machine from the analysed relative positions of the detected reference points;
- registering the determined pose.

20. Animal husbandry system comprising a group of animals (1, 6, 7, 8, 9) roaming about freely in an enclosed roaming area, monitoring means and at least one processor with image analysis means, said processor being configured to perform the method of any one of claims 1 - 19.
